(19) Europäisches Patentamt
European Patent Office
Office européen des brevets

(11) EP 3 347 388 B1

(12) # EUROPÄISCHE PATENTSCHRIFT

(45) Veröffentlichungstag und Bekanntmachung des Hinweises auf die Patenterteilung:
**29.09.2021 Patentblatt 2021/39**

(21) Anmeldenummer: **16753356.1**

(22) Anmeldetag: **16.08.2016**

(51) Int Cl.:
***C08F 220/18*** $^{(2006.01)}$ ***C09J 133/08*** $^{(2006.01)}$

(86) Internationale Anmeldenummer:
**PCT/EP2016/069440**

(87) Internationale Veröffentlichungsnummer:
**WO 2017/042003 (16.03.2017 Gazette 2017/11)**

(54) **KLEBHARZ-MODIFIZIERTE HAFTKLEBEMASSE**

ADHESIVE-RESIN-MODIFIED ADHESIVE MASS

MASSE ADHÉSIVE MODIFIÉE PAR UNE RÉSINE ADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2015 DE 102015217131**

(43) Veröffentlichungstag der Anmeldung:
**18.07.2018 Patentblatt 2018/29**

(73) Patentinhaber: **tesa SE**
**22848 Norderstedt (DE)**

(72) Erfinder:
- **BESCHMANN, Jennifer**
  **53343 Adendorf (DE)**
- **PRENZEL, Alexander**
  **22529 Hamburg (DE)**

(74) Vertreter: **tesa SE**
**Hugo-Kirchberg-Straße 1**
**22848 Norderstedt (DE)**

(56) Entgegenhaltungen:
**WO-A2-02/28963 US-A1- 2005 182 150**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 347 388 B1

Printed by Jouve, 75001 PARIS (FR)

## Beschreibung

Die Erfindung betrifft das technische Gebiet der Haftklebemassen, insbesondere der strahlungsvernetzten Haftklebemassen. Konkreter werden eine harzmodifizierte strahlungsvernetzte Haftklebemasse sowie ein Verfahren zu deren Herstellung über einen Heißschmelzprozess mit anschließender Strahlungsvernetzung und die Anwendung dieser Masse vorgestellt.

Durch Strahlung, insbesondere UV-Strahlung, vernetzte Haftklebemassen sind bereits seit langem bekannt. Sie bieten diverse Vorteile gegenüber den konventionellen, thermisch vernetzbaren Systemen. So können UV-vernetzbare Acrylatpolymere, die beispielsweise aus der Lösung auf einen Träger flächig aufgebracht werden, durch Variation der Aktivatorkonzentration und der UV-Dosis gezielt in gewünschtem Maße vernetzt werden. Die Steuerung der Vernetzungsdichte und damit vieler Produkteigenschaften ist somit neben der Vernetzerdosierung auch durch die Prozessparameter - hier die UV-Dosis - leicht möglich. Derartig dynamisch steuerbare Polymersysteme bedeuten einen wesentlichen Vorteil in einer modernen Produktionsstruktur, wenn ein komplexes Produktportfolio ausgehend von wenigen Grundbausteinen realisiert werden soll.

Die UV-Vernetzung kann durch unterschiedliche Methoden erreicht werden. Im einfachsten Fall wird ein UV-Aktivator einem üblichen, gesättigten Polyacrylat zugesetzt. Dabei unterscheidet man Norrish Typ I- und Typ II-Aktivatoren: erstere spalten nach der UV-Aktivierung, letztere abstrahieren nach der UV-Aktivierung Wasserstoffatome.

Es hat sich gezeigt, dass zugemischte Typ I-Photoinitiatoren in der Regel nicht in der Lage sind, vernetzungsfähige Radikale an einem gewöhnlichen gesättigten Polyacrylat zu erzeugen. Andere Konkurrenzreaktionen überwiegen. Setzt man hingegen einen Typ II-Photoinitiator zu, kann bei einer nicht weiter modifizierten Polyacrylatmasse, beispielsweise bei einem Copolymerisat aus 2-Ethylhexylacrylat und Acrylsäure, eine Vernetzungsreaktion erreicht werden. Allerdings ist diese nur von geringer Effizienz, wenn zur Erhöhung der Klebkraft Harze beigemischt werden. Dies liegt insbesondere darin begründet, dass die Harze UV-Licht absorbieren, einen stark regelnden Einfluss haben und somit die UV-Vernetzung negativ beeinflussen oder sogar verhindern. Auch der Zusatz von multifunktionellen Acrylaten oder Methacrylaten zur Steigerung der Vernetzungseffizienz bewirkt nur wenig. Zudem können nicht umgesetzte Acrylatgruppen zu einer störenden Nachvernetzung führen, die nachteilig für die Stabilität der Produkteigenschaften ist.

Eine elegantere Methode liegt darin, vinylische Doppelbindungen von vornherein in das Acrylatpolymer einzubauen, um die Vernetzung zu erleichtern.

US 4,234,662 beschreibt ein Verfahren zur Herstellung von Heißschmelzklebemassen mit druckempfindlichen Eigenschaften, welches aus den folgenden Schritten besteht: Copolymerisation von Allylacrylaten oder -methacrylaten mit zumindest einem copolymerisierbaren Acrylatmonomer, wodurch ein bei Raumtemperatur festes Prepolymer erhalten wird; Erwärmung des resultierenden festen, allylisch ungesättigten Prepolymers auf eine Temperatur, bei der es flüssig und fließfähig ist; und Schichtung des flüssigen Prepolymers auf ein Substrat. Das beschichtete Substrat wird einer Elektronenstrahlung von 1 bis 4 Megarad ausgesetzt, welche in der Lage ist, das Prepolymer zu vernetzen, wobei eine gehärtete druckempfindliche Klebmasse entsteht. Nachteil dieses Verfahrens ist die schwierige Durchführbarkeit, da die Polymerisate während der radikalisch initiierten Polymerisation und während der Schmelzbeschichtung zur Gelbildung neigen.

In US 5,391,406 und US 5,416,127 wird daher vorgeschlagen, die polymergebundenen Vinylgruppen gezielt durch eine polymeranaloge Reaktion mit meta-Isopropenyl-$\alpha$-$\alpha$-dimethylbenzylisocyanat (m-TMI) einzubauen. Derartig funktionalisierte Polymere lassen sich aus der Schmelze ohne Gelbildung beschichten, da die Ceilingtemperatur der thermischen Polymerisation der Isopropenylgruppe unterhalb der Beschichtungstemperatur liegt. Wird dem Polymer ein Photoinitiator zugesetzt, ist die Masse UVvernetzbar. Dennoch weist auch diese Methode praktische Nachteile auf: Zum einen ist der beschrittene Prozess über die polymeranaloge Reaktion sehr aufwendig und daher umständlich, zum anderen sind hochmolekulare, mit Doppelbindungen funktionalisierte Polymere, wie sie hierbei entstehen, besonders scheranfällig bei hohen Temperaturen und führen daher zu einer starken unerwünschten Vergelung während einer Verarbeitung im Heißschmelz-Prozess, wo aufgrund der Verarbeitung im Extruder hohe Scherkräfte wirken.

Copolymerisierbare Photoinitiatoren erleichtern ebenfalls die Vernetzung. So beschreibt die DE 24 43 414 A1 ein Verfahren zur Herstellung von mit einer Klebemasse auf Basis vernetzter Polyacrylsäurederivate selbstklebend ausgerüsteten Produkten, wobei die Klebemasse 0,01 bis 5 % eines einpolymerisierten Acrylsäure- oder Methacrylsäure-[(2-alkoxy-2-phenyl-2-benzoyl)-ethyl]esters als Photoinitiator enthält und durch kurzzeitige Bestrahlung mit ultraviolettem Licht vernetzt wird. Die dort als Photosensibilisatoren verwendeten (Meth-)Acrylsäureester sind allerdings nur durch mehrstufige Synthese mit relativ schlechter Ausbeute zugänglich und zudem nicht sehr effizient in der UV-Vernetzung.

In der DE 27 43 979 A1 wird ein Verfahren zur Herstellung von mit einer Selbstklebemasse auf Basis vernetzter Polyacrylsäurederivate beschichteten Produkten durch Einpolymerisation eines Photoinitiators in die Klebemasse und anschließende Vernetzung auf dem Trägermaterial durch kurzfristige UV-Bestrahlung beschrieben, bei dem als Photoinitiator 0,01 bis 5 Gew.-% Benzoinacrylat oder -methacrylat in die Haftklebemasse einpolymerisiert werden.

Die in diesen Patenten beschriebenen Klebemassen werden bevorzugt durch Polymerisation in der Lösung

hergestellt und dann aus der Lösung auf einen Träger beschichtet. Erst die getrocknete Schicht kann dann einer UV-Bestrahlung unterworfen werden. Allgemein weisen aber die copolymerisierten Photoinitiatoren einen wesentlichen Nachteil auf: Man ist in der Herstellung eines UV-vernetzenden Acrylathaftklebesystems sehr eingeschränkt, da nur sehr wenige Photoinitiatoren ohne große Umstände und daher wirtschaftlich interessant als copolymerisierbare Verbindungen zugänglich sind.

EP 0 578 151 B1 beschreibt die Verwendung von Haftklebern auf Polyacrylatbasis mit einpolymerisierten Benzoinderivaten zur großtechnischen kontinuierlichen Schmelzebeschichtung von Medizinprodukten mit anschließender Vernetzung des Klebers durch UV-Bestrahlung. Auch hier gelten die oben erwähnten Einschränkungen bezüglich der Verfügbarkeit wirtschaftlich interessanter Photoinitiatoren.

EP 0 343 467 A2, US 5,047,443 und US 5,264,533 beschreiben einpolymerisierbare Benzophenonderivate, die nach der UV-Bestrahlung Wasserstoffatome abstrahieren können. Im Gegensatz zu den spaltbaren Aktivatoren werden durch diese Photoaktivatoren keine niedermolekularen Bestandteile gebildet, die aus der gehärteten Masseschicht ausdampfen können und deren Eigenschaften negativ beeinflussen. So bildet sich nach der UV-Bestrahlung der unter anderem in DE 27 43 979 A1 beschriebenen Systeme Benzaldehyd, welches als störender Geruch wahrgenommen werden kann.

Alle bisher beschriebenen Photoinitiatoren beziehungsweise die aus ihnen hergestellten UV-vernetzbaren Acrylatpräpolymere haben eine deutliche Beschränkung hinsichtlich des Wellenlängenbereiches, welcher für die Vernetzungsreaktion eine auslösende Wirkung besitzt. Jeder in das System durch Copolymerisation eingebaute Photoinitiator gibt den im Weiteren zur Vernetzung zur Verfügung stehenden Wellenlängenbereich durch sein Absorptionsmaximum vor.

Hieraus ergibt sich eine Einschränkung, wenn das betreffende Acrylatpräpolymer beispielsweise in dickerer Schicht, als harzabgemischte Polymermasse oder mit Pigmenten versehen mittels ultravioletter Strahlung vernetzt werden soll. So kann die Vielzahl der herkömmlichen Systeme nur bis zu einer begrenzten Schichtdicke ausreichend vernetzt werden (beispielsweise das System aus der oben erwähnten DE 27 43 979 A1 bis zu einer Schichtdicke von 50 μm). Für dickere Schichten weist das Polymer in einem Wellenlängenbereich, in dem der Photoinitiator aktiv ist, keine ausreichende UV-Lichtdurchlässigkeit mehr auf. Pigmentierte Schichten, beispielsweise aus durch Titandioxid weißgefärbten Polymermassen, lassen sich in einem Wellenlängenbereich von 250 nm (Absorptionsmaximum der oben erwähnten Benzoinacrylate) gar nicht mehr UV-vemetzen.

Die US 5,194,455 beschreibt ein Verfahren zur Herstellung von druckempfindlichen Heißschmelzklebern auf Acrylatbasis durch Bestrahlung eines Substrates, bei welchem mindestens ein Acrylmonomer mit *N-tert*-Butylacrylamid (NTBAM) copolymerisiert wird. Die zu polymerisierende Reaktionsmischung kann zusätzlich eine oder mehrere ethylenisch ungesättigte Verbindungen enthalten, welche nicht zur Gruppe der oben erwähnten Acrylmonomere gehören. Das resultierende feste Polymer wird erwärmt und in einem fließfähigen oder flüssigen Zustand auf ein Substrat gebracht, wobei Additive und Hilfsstoffe enthalten sein können, und das beschichtete Substrat wird mit hochenergetischer Strahlung bestrahlt.

In der WO 96/35725 A1 wird ein vernetztes, pigmentiertes, druckempfindliches Klebemittel beansprucht, welches ein auf ein Substrat geschichtetes und derart durch UV-Strahlung gehärtetes Copolymer enthält, dass es bei 70 °C eine Scherfestigkeit von mindestens 20 Stunden besitzt. Das Klebemittel enthält ein Pigment, einen Wasserstoffabstrahierenden Photoinitiator und ein Copolymer auf Acrylatbasis, wobei das Copolymer aus einer im Wesentlichen säurefreien Monomermischung hergestellt ist, welche sich wie folgt zusammensetzt:

(i) 30 bis 99,99 Gew.-% mindestens eines Alkylacrylats, wobei die Alkylgruppe 1 bis 24 C-Atome besitzt,
(ii) 0,01 bis 15 Gew.-% eines eine tertiäre Aminogruppe beinhaltenden Monomers,
(iii) 0 bis 25 Gew.-% mindestens eines polaren Vinylmonomers und
(iv) 0 bis 30 Gew.-% eines Diesters einer ethylenisch ungesättigten Dicarbonsäure, jeweils bezogen auf das Totalgewicht der Monomere.

Zur Vernetzung von Schichten dieser Polyacrylate sind langwellige UV-Aktivatoren wie Isopropylthioxanthon notwendig. Nachteilig an einpolymerisierten Dimethylaminoalkylverbindungen ist die Beschränkung auf carbonsäurefreie Comonomere, wie in allen Ausführungsformen der WO 96/35725 A2 geschehen. Beispielsweise führt die thermisch initiierte Lösungspolymerisation von Acrylatmonomeren, Acrylsäure und olefinisch ungesättigten Dimethylaminoalkylverbindungen nach kurzer Reaktionszeit zu starkem Viskositätsanstieg und zur Vergelung

Gerade polare und speziell carbonsäurehaltige Acrylatpolymere sind besonders vorteilhaft für Hochleistungsklebemassen. Innere Festigkeit, die durch intermolekulare Wasserstoffbrückenbindungen deutlich beeinflusst wird, kann zusätzlich zur eigentlichen Vernetzung am effizientesten durch einpolymerisierbare Acrylsäure unterstützt werden. Auch das für Polyacrylate bekannte Aufziehverhalten, durch welches eine Verstärkung der Verklebungsfestigkeit erreicht wird, verbessert sich wesentlich bei Anwesenheit von nennenswerten Anteilen an einpolymerisierter Acrylsäure.

Insbesondere für gesättigte Systeme eignen sich die gängigen Initiatoren nicht oder nur dann, wenn durch

Comonomere oder benachbarte Elektronendonorgruppen eine Aktivierung des zu vernetzenden Systems erfolgt. Daher wurden bisher nur wenige UV-Vernetzungssysteme beschrieben, welche in der Lage sind, Polyacrylate ohne funktionelle Comonomere effizient zu vernetzen.

Nachteilig ist es weiterhin, dass viele der allgemein verwendeten Initiatoren den Heißschmelzprozess nicht überstehen, dass sie also bei Erwärmung auf Temperaturen, wie sie bei derlei Verfahren üblich sind, ihre Reaktivität als Vernetzungsstarter verlieren.

So werden als häufig eingesetzte Typ-I-Photoinitiatoren beispielsweise Benzoinmethylether und Benzildimethylketal genannt. Beide Photoinitiatoren lassen sich für den Heißschmelzprozess nicht oder nur in sehr beschränkter Weise einsetzen, da sie über einen längeren Zeitraum nicht stabil sind und sich zersetzen. Dies gilt insbesondere in acrylsäurehaltigen Systemen, welche bei Polyacrylathaftklebemassen in der Regel die Basis stellen.
Benzophenon als wasserstoffabstrahierender Initiator (Typ II) weist zwar eine höhere thermische Stabilität auf, sublimiert aber hochgradig unter thermischer Belastung und unter Vakuum aus der Acrylathaftklebemasse. Entsprechend verhält sich Campherchinon, welches ebenfalls nur ein relativ geringes Molekulargewicht aufweist und daher unter Vakuum bei erhöhten Temperaturen dazu neigt, sich aus der zu vernetzenden Masse zu verflüchtigen.

Viele der zuvor genannten Nachteile konnten durch die Verwendung eines polyfunktionellen $\alpha$-Spalters gelöst werden, wie es in WO 02/28963 A2 beschrieben wird; jedoch zeigen die Klebemassen meist kein ausgewogenes Verhältnis aus Adhäsion und Kohäsion. Zumindest die Klebkraft kann durch den Einsatz von Klebharzen verbessert werden, was häufig aber eine Absenkung der Kohäsion zur Folge hat.

Die DE 10 2004 003 764 A1 beschreibt den Einsatz von Kondensationsharzen, aufgebaut aus Harnstoff oder Harnstoffderivaten und Ketonen oder Aldehyden, als Klebharze in UV-vernetzbaren Acrylatheißschmelzklebemassen. Durch den Einsatz dieser Harze ergeben sich jedoch nur minimale Verbesserungen gegenüber harzfreien Massen hinsichtlich der Adhäsion und Kohäsion. Weiterhin ergeben sich - wie zuvor schon beschrieben - aufgrund der polymergebundenen Benzophenonfunktionalitäten Einschränkungen, wenn die Acrylatpräpolymere beispielsweise in dickerer Schicht, als harzabgemischte Polymermasse oder mit Pigmenten versehen vorliegen sollen.

US 2005/182150 A1 beschreibt ebenfalls UV-vernetzbare Acrylathaftklebemassen mit polymergebundenen Typ II-Photoinitiatoren, die ein Klebharz aus mindestens einem aromatischen Monomer und mindestens einem Acrylat enthalten. Zwar konnte gezeigt werden, dass trotz der UV-absorbierenden Klebharze gute Eigenschaften erzielt werden konnten, doch ergeben sich auch hier die zuvor aufgeführten Einschränkungen aufgrund des in das Polymer inkorporierten Photoinitiatortyps.

Aufgabe der Erfindung ist es, eine UV-vernetzte, Polyacrylat-basierte Haftklebemasse mit hoher Klebkraft und hoher Kohäsion zur Verfügung zu stellen. Die Formulierungen sollen über einen Heißschmelzprozess hergestellt werden und anschließend vernetzt werden können. Sie sollen dabei über eine längere Zeitdauer stabil gegenüber den drastischen Bedingungen des Heißschmelzprozesses sein, also eine entsprechend hohe Topfzeit aufweisen. Eine Vergelung des Polyacrylatsystems während des Heißschmelzprozesses soll - zumindest weitgehend - vermieden werden. Auf die Anwesenheit von zusätzlichen, die Vernetzung aktivierenden Gruppen oder Komponenten soll möglichst verzichtet werden können.

Zur Definition einer Schmelze eines amorphen Polymers wie beispielsweise eines Polyacrylats werden im Folgenden die in F. R. Schwarzl, Polymermechanik: Struktur und mechanisches Verhalten von Polymeren, Springer Verlag, Berlin, 1990 auf den Seiten 89 bis 91 definierten Kriterien, wonach die Viskosität die Größenordnung von etwa $\eta \approx 10^4$ Pa·s aufweist und die innere Dämpfung tan $\delta$ Werte von $\geq 1$ erreicht, verwendet.

Der Lösung der vorstehenden Aufgabe liegt der Gedanke zugrunde, spezielle UV-Initiatoren und Acrylat-basierte Klebharze einzusetzen. Ein erster, allgemeiner Gegenstand der Erfindung ist eine Haftklebemasse, die durch Vernetzung einer Zusammensetzung erhältlich ist, welche mindestens ein Poly(meth)acrylat mit einer gewichtsmittleren Molmasse $M_w$ von mindestens 100.000 g/mol und mindestens einen polyfunktionellen $\alpha$-Spalter umfasst und die dadurch gekennzeichnet ist, dass die Zusammensetzung mindestens ein klebkraftverstärkendes Harz mit einer gewichtsmittleren Molmasse $M_w$ von maximal 30.000 g/mol, bevorzugt von maximal 10.000 g/mol, enthält, das durch Polymerisation einer Monomerenzusammensetzung M1, ausschließlich umfassend eine oder mehrere Verbindungen gemäß der Formel (I)

$$H_2C{=}C(R^1)(COOR^2) \qquad (I),$$

worin $R^1$ für ein Wasserstoffatom oder eine Methylgruppe steht und $R^2$ für eine unfunktionalisierte $C_1$-$C_{20}$-Alkylgruppe steht, erhältlich ist.

Es hat sich gezeigt, dass die zu erfindungsgemäßen Haftklebemassen führende UV-Vernetzung durch die Acrylatharze kaum beeinträchtigt wird, andererseits aber Klebkraft und Kohäsion der Massen deutlich gesteigert werden. Die Massen sind in einem HotmeltProzess stabil verarbeitbar.

Unter einer Haftklebemasse wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die

Einwirkdauer dieses Drucks nicht näher definiert werden. In manchen Fällen, abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur. Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma)\cdot\cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G'' = (\tau/\gamma)\cdot\sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10° bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich $10^1$rad/sec (Abszisse) sowie den Bereich der G'-Werte von einschließlich $10^3$ bis einschließlich $10^7$ Pa (Ordinate) aufgespannt wird. Für G" gilt dies entsprechend.

Unter einem "Poly(meth)acrylat" wird ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zu mindestens 35 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten.

Der Begriff "Poly(meth)acrylat" bzw. "Poly(meth)acrylate" bezeichnet im Folgenden das Poy(meth)acrylat bzw. die Poly(meth)acrylate mit einer gewichtsmittleren Molmasse $M_w$ von mindestens 100.000 g/mol. Die gewichtsmittlere Molmasse $M_w$ wird erfindungsgemäß mittels Gelpermeationschromatographie (Messmethode A2, siehe Beispiele) ermittelt.

Bevorzugt ist das Poly(meth)acrylat bzw. sind die Poly(meth)acrylate der erfindungsgemäßen Haftklebemasse bzw. der zum Erhalt der erfindungsgemäßen Haftklebemasse zu vernetzenden Zusammensetzung (im Folgenden auch einfach als "erfindungsgemäße Zusammensetzung" bezeichnet) aus einer Monomerenzusammensetzung M2 aufgebaut, die aus

(i) 65 bis 100 Gew.-% eines oder mehrerer Acrylsäureester und/oder Methacrylsäureester der Formel (II)

$$H_2C=C(R^1)(COOR^3) \qquad (II),$$

worin $R^1$ für ein Wasserstoffatom oder eine Methylgruppe steht und $R^3$ für eine unsubstituierte $C_1$-$C_{22}$-Alkylkette steht;

(ii) 0 bis 20 Gew.-% Acrylsäure und/oder Methacrylsäure;

(iii) 0 bis 35 Gew.-% eines/einer oder mehrerer nicht der Formel (II) entsprechender Acrylsäureester und/oder Methacrylsäureester und/oder anderer Vinylverbindungen mit funktionellen Gruppen,

jeweils bezogen auf das Gesamtgewicht der Monomerenzusammensetzung M2, besteht.

Die Herstellung des Poly(meth)acrylats erfolgt bevorzugt über eine freie oder kontrollierte radikalische Polymerisation. Die Polymerisation kann in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter $N_2$-Atmosphäre und Überdruck ausgerüstet sind.

Die radikalische Polymerisation wird in Gegenwart eines oder mehrerer organischer Lösungsmittel und/oder in Gegenwart von Wasser oder in Substanz durchgeführt. Es wird dabei angestrebt, die verwendete Lösungsmittelmenge so gering wie möglich zu halten. Die Polymerisationszeit beträgt in der Regel - je nach Umsatz und Temperatur - zwischen 6 und 48 Stunden. Das mittels Gelpermeationschromatographie (Messmethode A2) bestimmte gewichtsmittlere Molekulargewicht $M_w$ der Polymere beträgt bevorzugt zwischen 300.000 und 2.000.000 g/mol, bevorzugt zwischen 600.000 und 1.200.000 g/mol.

Zur Lösungsmittelpolymerisation werden als Lösemittel vorzugsweise Ester gesättigter Carbonsäuren (z.B. Ethylacetat), aliphatische Kohlenwasserstoffe (z.B. n-Hexan oder n-Heptan), Ketone (z.B. Aceton oder Methylethylketon), Siedegrenzbenzin oder Gemische dieser Lösungsmittel verwendet. Sehr bevorzugt wird ein Lösungsmittelgemisch aus Aceton und Isopropanol eingesetzt, wobei der Isopropanolgehalt zwischen 1 und 10 Gewichtsprozent liegt. Als Polymerisationsinitiatoren werden gewöhnlich übliche radikalbildende Verbindungen, wie beispielsweise Peroxide und Azoverbindungen, eingesetzt. Auch Initiatorgemische können verwendet werden. Bei der Polymerisation können auch Thiole als weitere Regler zur Molekulargewichtssenkung und Verringerung der Polydispersität eingesetzt werden. Als weitere sogenannte Polymerisationsregler können z. B. Alkohole und Ether verwendet werden.

Vorzugsweise sind die Monomere (i) ausgewählt aus der Gruppe bestehend aus Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigten Isomeren, insbesondere 2-Ethylhexylacrylat; Cyclohexylmethacrylat, Isobornylacrylat und Isobornylmethacrylat.

Vorzugsweise sind die Monomere (iii) ausgewählt aus der Gruppe bestehend aus Maleinsäureanhydrid, Itaconsäureanhydrid, Glycidylmethacrylat, Hydroxyethylacrylat, 4-Hydroxybutylacrylat, Benzylacrylat, Benzylmethacrylat, Phenylacrylat, Phenylmethacrylat, *tert*-Butylphenylacrylat, *tert*-Butylphenylmethacrylat, Phenoxyethylacrylat, Phenoxyethylmethacrylat, 2-Butoxyethylmethacrylat, 2-Butoxyethylacrylat, Tetrahydrofurfurylacrylat, Styrol, 4-Vinylpyridin, *N*-Vinylpyrrolidon, *N*-Vinylphthalimid, Methylstyrol und 3,4-Dimethoxystyrol.

Die Comonomere (i) bis (iii) des mindestens einen Poly(meth)acrylats der erfindungsgemäßen Zusammensetzung werden bevorzugt so gewählt, dass die Glasübergangstemperatur $T_{G,A}$ des Polymers unterhalb der Anwendungstemperatur, bevorzugt bei $T_{G,A} \leq 15$ °C liegt. Weiter werden die Anteile an der Monomerenzusammensetzung vorzugsweise derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die erfindungsgemäße Zusammensetzung kann eines oder mehrere Poly(meth)acrylate mit einer gewichtsmittleren Molmasse $M_w$ von mindestens 100.000 g/mol enthalten. Bevorzugt sind Poly(meth)acrylate mit einer gewichtsmittleren Molmasse $M_w$ von mindestens 100.000 g/mol in der erfindungsgemäßen Zusammensetzung zu insgesamt 50 bis 90 Gew.-%, stärker bevorzugt zu insgesamt 60 bis 80 Gew.%, jeweils bezogen auf das Gesamtgewicht der Zusammensetzung, enthalten.

Die erfindungsgemäße Zusammensetzung bzw. Haftklebemasse kann weitere Polymere enthalten, die als Blend oder Abmischung mit dem oder den Poly(meth)acrylat(en) vorliegen, beispielsweise Naturkautschuk, Synthesekautschuke, EVA, Siliconkautschuke, Acrylkautschuke und/oder Polyvinylether.

Die erfindungsgemäße Zusammensetzung umfasst mindestens einen polyfunktionellen α-Spalter. Erfindungsgemäß werden als α-Spalter als Initiator fungierende Verbindungen bezeichnet, welche während des Initiierungsschrittes der Vernetzung, beispielsweise durch ultraviolette Bestrahlung, intramolekular spalten und dabei in radikalische Fragmente zerfallen. Dabei wird die Bindung zu dem in α-Position zu einer die Radikalbildung aktivierenden Gruppe, insbesondere zu einer Carbonylgruppe, stehenden Kohlenstoffatom oder Heteroatom aufgespalten. "Polyfunktionell" bedeutet, dass der α-Spalter mindestens zwei die Radikalbildung aktivierende Gruppen aufweist.

Bevorzugt ist der polyfunktionelle α-Spalter ein Poly-α-hydroxyketon.

Besonders bevorzugt ist der polyfunktionelle α-Spalter Oligo[2-hydroxy-2-methyl-1-[4-(1-methylvinyl)phenyl]propanon] (III), kommerziell vertrieben beispielsweise unter der Bezeichnung Esacure® KIP 150 von der Firma Lamberti.

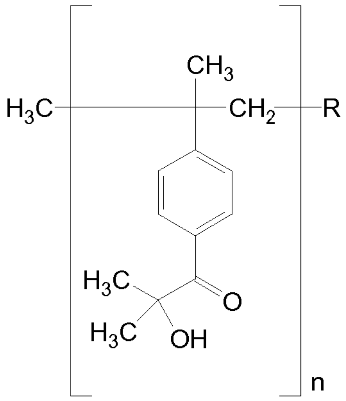

(III)

Oligo[2-hydroxy-2-methyl-1-[4-(1-methylvinyl)phenyl)propanon kann erfindungsgemäß auch als Bestandteil einer Mischung mit weiteren UV-aktiven Substanzen vorliegen, wie sie beispielsweise als Esacure® KT55 von der Firma Lamberti vertrieben wird.

Ebenfalls besonders bevorzugt ist der polyfunktionelle α-Spalter ein α-Hydroxyketon der Struktur (IV)

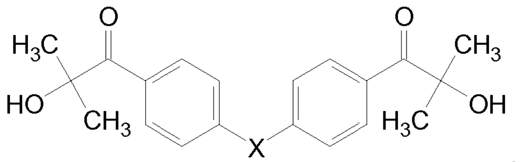

(IV)

,

worin X für ein Sauerstoffatom oder eine $CH_2$-Gruppe steht. Insbesondere ist das α-Hydroxyketon der Struktur (IV) 2-Hydroxy-1-[4-[4-(2-hydroxy-2-methylpropanoyl)phenoxy]phenyl]-2-methylpropan-1-on, kommerziell vertrieben beispielsweise unter der Bezeichnung Esacure® KIP 160 von der Firma Lamberti.

Bevorzugt umfasst die erfindungsgemäße Zusammensetzung 0,1 bis 5 Gew.-%, insbesondere 0,25 bis 1 Gew.-%, jeweils bezogen auf das zu vernetzende Polymer, polyfunktionelle α-Spalter. Es können ein oder mehrere polyfunktionelle α-Spalter enthalten sein.

Vorzugsweise wird der als Photoinitiator dienende α-Spalter beim Aufbau des zu vernetzenden Polymers nicht einpolymerisiert, sondern als separate Komponente nach der Polymerisation, aber vor der Vernetzung, zugemischt. Im Online-Betrieb ist dies gleichbedeutend mit einer Zugabe vor dem Heißschmelzprozess, da die Vernetzung unmittelbar hierauf folgt.

Es hat sich gezeigt, dass die erfindungsgemäß verwendeten UV-Initiatoren über eine längere Dauer die Bedingungen des Heißschmelzprozesses überstehen: So konnte über eine Stunde und länger weder eine Zersetzung oder sonstige Zerstörung festgestellt werden, noch verflüchtigten sich diese Initiatoren, wie es für die üblicherweise im Heißschmelzprozess verwendeten UV-Initiatoren in der Regel spätestens während des Aufkonzentrationsprozesses beobachtet wird.

Zur Erhöhung der Lebensdauer der Haftklebemassen und ihrer Vorprodukte empfiehlt es sich, diese im Dunkeln aufzubewahren bzw. zu verarbeiten.

Die erfindungsgemäße Zusammensetzung umfasst weiter mindestens ein klebkraftverstärkendes Harz mit einer gewichtsmittleren Molmasse $M_w$ von maximal 30.000 g/mol, bevorzugt von maximal 10.000 g/mol, das durch Polymerisation einer Monomerenzusammensetzung M1, ausschließlich umfassend eine oder mehrere Verbindungen gemäß der Formel (I)

$$H_2C=C(R^1)(COOR^2) \quad (I),$$

worin $R^1$ für ein Wasserstoffatom oder eine Methylgruppe steht und $R^2$ für eine unfunktionalisierte $C_1$-$C_{20}$-Alkylgruppe steht, erhältlich ist.

Weiterhin sind bevorzugt die Comonomerenzusammensetzung des Harzes (M1) und die des Poly(meth)acrylats (M2) so gewählt, dass die Glasübergangstemperatur des Harzes mindestens um 10 K, stärker bevorzugt um mindestens 20 K höher als die des Poly(meth)acrylats liegt. Insbesondere ist die Glasübergangstemperatur des Harzes um mindestens 30 bis maximal 100 K höher als die des Poly(meth)acrylats. Ganz besonders bevorzugt ist die Glasübergangstemperatur aller klebkraftverstärkenden Harze der erfindungsgemäßen Zusammensetzung um mindestens 10 K, insbesondere um mindestens 20 K, ganz besonders um mindestens 30 bis maximal 100 K höher als die jedes in der erfindungsgemäßen Zusammensetzung enthaltenen Poly(meth)acrylats mit einer gewichtsmittleren Molmasse $M_w$ von mindestens 100.000 g/mol.

Das klebkraftverstärkende Harz weist bevorzugt einen Ring- & Ball-Erweichungspunkt (ASTM E28-99) von bei Raumtemperatur flüssig bis 180 °C, bevorzugt von 50 °C bis 150 °C, besonders bevorzugt von 75 °C bis 120 °C, auf. Die Säurezahl des Harzes, gemessen gemäß DIN EN ISO 2114, beträgt vorzugsweise von 0 bis 300 mg KOH/g Harz, stärker bevorzugt von 0 bis 200 mg KOH/g Harz, besonders bevorzugt von 5 bis 150 mg KOH/g Harz. Die Hydroxylzahl, bestimmt nach DIN 53240-1, beträgt bevorzugt von 0 bis 300, besonders bevorzugt von 0 bis 200.

Bevorzugt weist das klebkraftverstärkende Harz bzw. weisen die klebkraftverstärkenden Harze der erfindungsgemäßen Zusammensetzung einen MMAP-Trübungspunkt (mixed methylcyclohexane-aniline point) von geringer als 50 °C auf. Stärker bevorzugt liegt der MMAP-Trübungspunkt zwischen -20 °C und 30 °C, besonders bevorzugt zwischen -10 °C und 20 °C.

Das zahlenmittlere Molekulargewicht $M_n$ (bestimmt mittels GPC, Messmethode A2) der klebkraftverstärkenden Harze beträgt bevorzugt 1.000 bis 7.000 g/mol, stärker bevorzugt 1.500 bis 4.500 g/mol, besonders bevorzugt 1.600 bis 4.000 g/mol; das gewichtsmittlere Molekulargewicht $M_w$ (ebenfalls mittels GPC bestimmt) beträgt bevorzugt 2.000 bis 30.000 g/mol, stärker bevorzugt 2.500 bis 12.000 g/mol, besonders bevorzugt 3.000 bis 10.000 g/mol.

Für viele Anwendungen ist es von Vorteil, wenn das Klebharz nicht oder nur schwach verfärbt ist, was auch zusätzlichen Einfluss auf die Vernetzung haben kann. Deshalb weist das Harz bevorzugt eine Gardner-Farbzahl (ASTM D1544) von geringer als 5, stärker bevorzugt von geringer als 2, besonders bevorzugt von geringer als 1, auf.

Als Beispiele für kommerziell verfügbare, klebkraftverstärkende Harze seien die MB 2500er-Serie der Firma Dianal America Inc. und Paraloid™ DM-55 der Firma Dow genannt.

Überraschend hat sich herausgestellt, dass die erfindungsgemäß eingesetzten klebkraftverstärkenden Harze neben ihrer klebkraftverstärkenden Wirkung keine negative Beeinflussung der UV-Vernetzung hervorriefen. Dies ist zumindest insofern überraschend, als zu erwarten gewesen wäre, dass aufgrund der chemischen Ähnlichkeit der Poly(meth)acrylate und der Klebharze eine sehr unselektive Vernetzung und somit eine geringe Kohäsion bei einer gegebenen UV-Dosis erzielt würde. Es wurden aber sehr zufriedenstellende Resultate hinsichtlich der Vernetzung und der Kohäsion der Massen erreicht, so dass das Potential der eingesetzten Harze weitgehend uneingeschränkt zur Verbesserung des Adhäsionsvermögens der erfindungsgemäßen Haftklebemassen genutzt werden konnte.

Die erfindungsgemäße Zusammensetzung kann ein oder mehrere klebkraftverstärkende Harze enthalten. Bevorzugt sind erfindungsgemäße klebkraftverstärkende Harze, die durch Polymerisation einer Monomerenzusammensetzung M1, in der erfindungsgemäßen Zusammensetzung zu 10 bis 50 Gew.-%, stärker bevorzugt zu 15 bis 45 Gew.-%, besonders bevorzugt zu 20 bis 40 Gew.-% enthalten, jeweils bezogen auf das Gesamtgewicht der erfindungsgemäßen Zusammensetzung.

Die erfindungsgemäße Zusammensetzung kann neben den vorstehend beschriebenen, erfindungsgemäß zwingend vorhandenen klebkraftverstärkenden Harzen weitere Klebharze enthalten. Hierzu sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze; die aliphatischen und aromatischen Kohlenwasserstoffharze, beispielsweise $C_5$- oder Cg-Kohlenwasserstoffharze, Terpenharze und Terpenphenolharze; sowie Kondensationsharze, aufgebaut aus Harnstoff oder Harnstoffderivaten und Ketonen oder Aldehyden. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen. Bevorzugt enthält die erfindungsgemäße Zusammensetzung klebkraftverstärkende Harze zu insgesamt - also betreffend die Gesamtheit aus erfindungsgemäß zwingend vorhandenen klebkraftverstärkenden Harzen und gegebenenfalls eingesetzten weiteren Klebharzen - maximal 50 Gew.-%, bezogen auf das Gesamtgewicht der erfindungsgemäßen Zusammensetzung.

Bevorzugt enthält die erfindungsgemäße Zusammensetzung Aminoacrylate, insbesondere oligomere Aminoacrylate. Die Geschwindigkeit der Vernetzung kann hierdurch gesteigert werden. Als besonders geeignet haben sich

die unter dem Handelsnamen Genomer$^{TM}$ angebotenen Produkte wie beispielsweise Genomer 5275$^{TM}$ der Firma Rahn herausgestellt. Bei der Zugabe der Aminoacrylate ist zu beachten, dass mit Erhöhung der Geschwindigkeit der Vernetzung die Stabilität unter Heißschmelzbedingungen absinkt. Die Zugabe dieser Verbindungen erfolgt daher vorzugsweise erst kurz vor der Vernetzung.

Zur Steigerung der Vernetzungseffizienz werden die unvernetzten Polymere der erfindungsgemäßen Zusammensetzung optional mit Vernetzern abgemischt. Geeignete Vernetzersubstanzen sind beispielsweise bi- oder multifunktionelle Acrylate. Verwendet werden können aber auch alle weiteren, dem Fachmann geläufigen bi-oder multifunktionellen Verbindungen, die in der Lage sind, Polyacrylate zu vernetzen.

Die erfindungsgemäße Zusammensetzung bzw. die erfindungsgemäße Haftklebemasse kann ferner auch pulver- und/oder granulatförmige Füllstoffe, Farbstoffe und/oder Pigmente enthalten, besonders auch abrasive und verstärkende Füllstoffe wie z.B. Aerosile (pyrogene Kieselsäuren).

Darüber hinaus kann die erfindungsgemäße Zusammensetzung bzw. Haftklebemasse Weichmacher (Plastifizierungsmittel) enthalten, insbesondere in Konzentrationen von bis zu 5 Gew.-%, bezogen auf das Gesamtgewicht der Zusammensetzung bzw. Haftklebemasse. Als Weichmacher können beispielsweise Phthalate, wasserlösliche Weichmacher, Weichharze, Phosphate, Polyphosphate, Adipate und/oder Citrate eingesetzt werden.

Die UV-Vernetzung der erfindungsgemäßen Zusammensetzung wird bevorzugt mittels kurzzeitiger ultravioletter Bestrahlung in einem Wellenlängenbereich von 200 bis 400 nm, insbesondere unter Verwendung von Quecksilber-Hochdruck- oder -Mitteldruck-Lampen bei einer Leistung von 80 bis 200 W/cm, bewirkt.

Zusätzlich zur UV-Vernetzung kann die innere Festigkeit (Kohäsion) der erfindungsgemäßen Haftklebemassen optional durch eine thermische Vernetzung gesteigert werden. Hierzu können der Polyacrylat-haltigen erfindungsgemäßen Zusammensetzung verträgliche Vernetzersubstanzen zugesetzt werden, zum Beispiel Metallchelate, multifunktionelle Isocyanate, multifunktionelle Amine, multifunktionelle Epoxide, multifunktionelle Aziridine, multifunktionelle Oxazoline oder multifunktionelle Carbodiimide, die mit im Polymer enthaltenen und reaktiven Funktionalitäten reagieren können.

Die mit den obligatorischen und gegebenenfalls optionalen Komponenten abgemischten unvernetzten Polymere werden bevorzugt als Heißschmelzmasse (Hotmelt) auf einen Träger (PP, BOPP, PET, Vlies, PVC, Polyester, Polyolefin-, Polyacrylat- oder Polyurethanschaum etc.) oder auf ein Trennpapier (Glassine, HDPE, LDPE) direkt aufgetragen oder umlaminiert. Die UV-Vernetzung findet dann bevorzugt direkt auf diesem Träger statt. Werden wie oben beschrieben Aminoacrylate hinzugegeben, geschieht dies vorzugsweise unmittelbar vor der Beschichtung, um die Zeit, während der die Verbindungen den vergleichsweise drastischen Bedingungen ausgesetzt sind, auf ein Minimum zu reduzieren.

Im Folgenden wird die Erfindung anhand von Beispielen näher erläutert.

## Experimenteller Teil

Messmethoden (allgemein):

K-Wert (nach Fikentscher) (Messmethode A1):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines Vogel-Ossag-Viskosimeters deren kinematische Viskositäten bestimmt. Nach Normierung auf die Viskosität des Toluols wird die relative Viskosität erhalten, aus der sich nach Fikentscher der K-Wert errechnen lässt *(*Polymer 1967, 8, 381 ff.*)*.

Gelpermeationschromatographie GPC (Messmethode A2):

Die Angaben des zahlenmittleren Molekulargewichtes $M_n$, des gewichtsmittleren Molekulargewichtes $M_w$ und der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, $10^3$ Å, ID 8,0 mm x 50 mm verwendet. Zur Auftrennung werden die Säulen des Typs PSS-SDV, 5 µ, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

Statische Glasübergangstemperatur Tg (Messmethode A3)

Die Bestimmung der statischen Glasübergangstemperatur erfolgt über Dynamische Differenzkalorimetrie nach

DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

Bestimmung des Gelanteils (Messmethode A4):

Die sorgfältig getrockneten lösungsmittelfreien Klebstoffproben werden in ein Vliestütchen aus Polyethylen (Tyvek-Vlies) eingeschweißt. Aus der Differenz der Probengewichte vor und nach Extraktion durch Ethylacetat wird der Gelwert, also der nicht in Toluol lösliche Gewichtsanteil des Polymers, bestimmt. Additive, wie beispielsweise Harze, die auch nach UV-Bestrahlung nicht in das Netzwerk eingebaut werden, müssen vom Gesamtprobengewicht vor der Extraktion subtrahiert werden.

Messmethoden (Haftklebemassen):

180° Klebkrafttest (Messmethode H1):

Ein 20 mm breiter Streifen der auf Polyester als Schicht aufgetragenen Haftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen.

Scherstandzeit (Haftklebemasse auf PET-Folie, Messmethode H2):

Ein 13 mm breiter und 30 mm langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm *13 mm (Länge * Breite), wobei das Klebeband die Prüfplatte am Rand um 10 mm überragte. Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.

Bei Raumtemperatur wurde ein Gewicht von 1 kg an dem überstehenden Ende des Klebebandes befestigt. Die Messung wurde bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Kommerziell erhältliche, eingesetzte Chemikalien.

| *Chemische Verbindung* | *Handelsname* | *Hersteller* | *CAS-Nr.* |
|---|---|---|---|
| 2,2'-Azobis(2-methylbutyronitril) | Vazo® 67 | DuPont | 13472-08-7 |
| Bis-(4-*tert*-butylcyclohexyl)peroxydicarbonat | Perkadox® 16 | Akzo Nobel | 15520-11-3 |
| 2,2'-Azobis(isobutyroniltril) | Vazo® 64 | DuPont | 78-67-1 |
| Acrylatharz (Tg = 60 °C, Mw = 7.000 g/mol, Säurezahl = 6) | Dianal MB-2594 | Dianal America, Inc. | - |
| Acrylazharz (MMA-Copolymer, Tg = 70 °C, Mw = 6.000 g/mol) | Paraloid™ DM-55 | Dow | - |
| 2-Hydroxy-1-[4-[4-(2-hydroxy-2-methylpropanoyl)phenoxy]phenyl]-2-methylpropan-1-on | Esacure® KIP 160 | Lamberti | 71868-15-0 |
| Oligo[2-hydroxy-2-methyl-1-[4-(1-methylvinyl)phenyl)propanon | Esacure® KIP 150 | Lambert | 163702-01-0 |

(fortgesetzt)

| *Chemische Verbindung* | *Handelsname* | *Hersteller* | *CAS-Nr.* |
|---|---|---|---|
| 2-Isopropylthioxanthon | Speedcure™ ITX | Lambson | 5495-84-1 |
| 2,2-Dimethoxy-1,2-diphenylethan-1-on | Irgacure® 651 | BASF SE | 24650-42-8 |
| Bis(2,4,6-trimethylbenzoyl)-phenylphosphinoxid | Irgacure® 819 | BASF SE | 162881-26-7 |
| 4-(4-Methylphenylthio)-benzophenon | Speedcure™ BMS | Lambson | 83848-85-9 |
| 2-Benzyl-2-dimethylamino-1-(4-morpholinophenyl)-butan-1-on | Irgacure® 369 | BASF SE | 119313-12-1 |
| Terpenphenolharz (Erweichungspunkt 110 °C; $M_w$ = 500 - 800 g/mol; D = 1,50) | Dertophene® T11 0 | DRT resins | 25359-84-6 |
| Harnstoff-Aldehyd-Harz (Schmelzbereich 80 - 95 °C) | Laropal® A 81 | BASF SE | 28211-77-0 |
| Harz aus hydriertem Abietinsäureester (Erweichungspunkt 85 °C) | Foral™ 85-E | Eastman | 8050-31-5 |
| UV-vernetzbare Acrylat-Hotmelt-Haftklebemasse(K-Wert 48 - 52) | acResin® A 260 UV | BASF SE | - |
| alle Spezifikationsangaben bei 20 °C. | | | |

I Herstellung und Vernetzung der Harz-modifizierten Klebemassen - Einfluss des Photoinitiators

Herstellung der Referenzpolymere:

Haftklebemasse PSA1:

Ein für radikalische Polymerisationen konventioneller 200 L-Glasreaktor wurde mit 2,4 kg Acrylsäure (AS, 3 %), 39,0 kg 2-Ethylhexylacrylat (EHA, 48,5 %), 39,0 kg Butylacrylat (BA, 48,5 %) und 53,3 kg Aceton/Isopropanol (96:4) befüllt. Nach 45minütiger Durchleitung von Stickstoffgas unter Rühren wurde der Reaktor auf 58 °C hochgeheizt und 0,8 kg Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,8 kg Vazo® 67 hinzugegeben. Über einen Zeitraum von 5 h wurde jeweils stündlich je nach Viskositätsanstieg mit jeweils 5,0 bis 10,0 kg Aceton/Isopropanol (96:4) verdünnt. Zur Reduktion der Restmonomere wurden nach 6 und nach 7 h jeweils 1,5 kg Perkadox® 16 hinzugegeben und zwischendurch noch mit 15 kg Aceton/Isopropanol (96:4) verdünnt. Die Reaktion wurde nach 24 h Reaktionszeit abgebrochen und auf Raumtemperatur abgekühlt.

Das resultierende Polyacrylat hatte einen K-Wert von 75,1, ein mittleres Molekulargewicht von $M_w$ = 1.048.000 g/mol, eine Polydispersität von D ($M_w/M_n$) = 16,9 und eine statische Glasübergangstemperatur von Tg = -39,9 °C.

Haftklebemasse PSA2:

Ein für radikalische Polymerisationen konventioneller 200 L-Glasreaktor wurde mit 4,8 kg Acrylsäure (AS, 6 %), 3,2 kg N-*tert*-Butylacrylamid (NTBAM, 4 %), 9,6 kg Methylacrylat (MA, 12 %), 62,4 kg 2-Ethylhexylacrylat (EHA, 78 %) und 60 kg Aceton/Isopropanol (96:4) befüllt. Nach 45minütiger Durchleitung von Stickstoffgas unter Rühren wurde der Reaktor auf 58 °C hochgeheizt und 40 g 2,2'-Azoisobutyronitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 40 g AIBN hinzugegeben. Die Reaktion wurde nach 48 h Reaktionszeit abgebrochen und auf Raumtemperatur abgekühlt.

Das resultierende Polyacrylat hatte einen K-Wert von 62,2, ein mittleres Molekulargewicht von $M_w$ = 965.000 g/mol, eine Polydispersität von D ($M_w/M_n$) = 9,9 und eine statische Glasübergangstemperatur von Tg = -19,2 °C.

UV-Bestrahlung

Zur UV-Bestrahlung wurde eine UV-Anlage der FA. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei zur Erhöhung der Bestrahlungsdosis die Muster in mehreren

Durchgängen bestrahlt wurden.

Beispiel I/1 (Referenz):

70 Gewichtsanteile der Haftklebemasse PSA1 wurden mit 30 Gewichtsanteilen des Acrylatharzes Dianal MB-2594 sowie mit 0,5 Gew.-% Esacure® KIP 160, bezogen auf das Polymer, abgemischt und anschließend in einem Einschneckenextruder (FA. Berstorff) aufkonzentriert. Die Drehzahl der Schnecke betrug 160 U/min, es wurde ein Durchsatz von 55 kg/h realisiert. Zur Aufkonzentration wurde an drei verschiedenen Domen ein Vakuum angelegt. Die Unterdrücke betrugen jeweils 130 mbar, 75 mbar und 60 mbar, wobei das geringste Vakuum im ersten Dom angelegt wurde. Die Austrittstemperatur des aufkonzentrierten Hotmelts lag bei 130 °C. Zur Beschichtung wurden die Stränge in einer Breitschlitzdüse (Fa. Pröls) aufgeschmolzen. Nach Temperierung bei 120 °C für 48 h wurde auf eine 23 μm dicke, geätzte PET-Folie beschichtet. Der Masseauftrag betrug 50 g/m$^2$. Das Klebebandmuster wurde dann mit der UV-Anlage bestrahlt. Zur Ermittlung der Effizienz der Vernetzung wurde jeweils die Messmethode A4 durchgeführt.

Beispiel I/2 (Referenz):

70 Gewichtsanteile der Haftklebemasse PSA1 wurden mit 30 Gewichtsanteilen des Acrylatharzes Dianal MB-2594 und 0,5 Gew.-% Esacure® KIP 150, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Vergleichsbeispiel I/3:

70 Gewichtsanteile der Haftklebemasse PSA1 wurden mit 30 Gewichtsanteilen des Acrylatharzes Dianal MB-2594 und 0,5 Gew.-% Speedcure™ ITX, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Vergleichsbeispiel I/4:

70 Gewichtsanteile der Haftklebemasse PSA1 wurden mit 30 Gewichtsanteilen des Acrylatharzes Dianal MB-2594 und 0,5 Gew.-% Irgacure® 651, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Vergleichsbeispiel I/5:

70 Gewichtsanteile der Haftklebemasse PSA1 wurden mit 30 Gewichtsanteilen des Acrylatharzes Dianal MB-2594 und 0,5 Gew.-% Irgacure® 819, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Vergleichsbeispiel I/6:

70 Gewichtsanteile der Haftklebemasse PSA1 wurden mit 30 Gewichtsanteilen des Acrylatharzes Dianal MB-2594 und 0,5 Gew.-% Speedcure™ BMS, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Beispiel I/7:

75 Gewichtsanteile der Haftklebemasse PSA2 wurden mit 25 Gewichtsanteilen des Acrylatharzes Paraloid™ DM-55 und 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurde die Messmethode A4 durchgeführt.

Vergleichsbeispiel I/8:

75 Gewichtsanteile der Haftklebemasse PSA2 wurden mit 25 Gewichtsanteilen des Acrylatharzes Paraloid™ DM-55 und 0,5 Gew.-% Irgacure® 369, bezogen auf das Polymer, abgemischt. Anschließend wurde analog zu Beispiel I/1 vorgegangen. Das Klebebandmuster wurde mit der UV-Anlage bestrahlt und zur Ermittlung der Vernetzungseffizienz die Messmethode A4 durchgeführt.

Resultate:

Um die Effizienz der erfindungsgemäßen Haftklebemasseformulierungen zu demonstrieren, wurde zunächst der Einfluss der polyfunktionellen $\alpha$-Spalter-Photoinitiatoren im Vergleich zu alternativen UV-Photoinitiatoren getestet. Irgacure® 819, 651, 369 und Speedcure™ BMS sind Standardsysteme - sowohl Norrish Typ-I- als auch Norrish Typ-II-Initiatoren - zur UV-Vernetzung von Polyacrylaten. Speedcure™ ITX gilt als äußerst reaktiver Photoinitiator und wurde daher ebenfalls im Vergleich getestet. Die Ergebnisse sind in Tabelle 1 zusammengefasst.

Tabelle 1: Einfluss der Photoinitiatoren

| Tabelle 1 | | |
|---|---|---|
| Beispiel | UV-Bestrahlung (Anzahl der Durchgänge) | Gelwert [%][a)] |
| I/1 | 0 | 0 |
| I/1 | 1 | 35 |
| I/1 | 2 | 74 |
| I/2 | 0 | 0 |
| I/2 | 1 | 28 |
| I/2 | 2 | 71 |
| I/3 | 1 | 9 |
| I/3 | 2 | 22 |
| I/4 | 1 | 3 |
| I/4 | 2 | 5 |
| I/5 | 1 | 5 |
| I/5 | 2 | 12 |
| I/6 | 1 | 9 |
| I/6 | 2 | 16 |
| I/7 | 1 | 24 |
| I/7 | 2 | 61 |
| I/8 | 1 | 2 |
| I/8 | 2 | 11 |
| [a)] Messmethode A4 | | |

Mit den polyfunktionellen Photoinitiatoren (Beispiele I/1, I/2 und I/7) wurden die besten Ergebnisse erzielt. Bereits mit sehr geringen Dosen (angegeben in Durchläufen durch die UV-Anlage) ließen sich sehr hohe Gelwerte erzielen, sodass diese Photoinitiatoren sehr gut geeignet sind, Harz-modifizierte Polyacrylathaftklebemassen zu vernetzen. Im Vergleich zu den anderen Photoinitiatoren wird somit ein erheblich geringerer bestrahlungstechnischer Aufwand (Anzahl an UV-Lampen, Energie) benötigt, was den Prozess wirtschaftlich wesentlich vorteilhafter macht.

Weiterhin ist der Tabelle 1 zu entnehmen, dass einige Photoinitiatoren nahezu keine Wirkung für die Vernetzung Harz-modifizierter Polyacrylate besitzen und dass der Unterschied bezüglich der erreichbaren Gelwerte nach der Vernetzung zwischen den mit polyfunktionellen Photoinitiatoren initiierten Vernetzungsvorgängen und den anderen Systemen sehr groß ist. Die Effizienzsteigerung ist somit signifikant.

Weiterhin ist bekannt, dass die geringe Flüchtigkeit von Photoinitiatoren ein Problem für den Heißschmelzprozess (Hotmeltprozess) darstellt. Bei Verwendung der polyfunktionellen Photoinitiatoren wird diese Flüchtigkeit aufgrund der höheren Molekulargewichte deutlich herabgesetzt; dies ist ein weiterer Vorteil der erfindungsgemäßen Formulierungen in Bezug auf die Hotmeltverarbeitbarkeit.

Aufgrund des geringen Vernetzungsgrades wurden die Vergleichsbeispiele nicht klebtechnisch bewertet.

II Herstellung und Vernetzung der Klebemassen - Einfluss des Harzes

Beispiel II/1 (Referenz):

Das Beispiel entspricht Beispiel I/1. Zur Überprüfung der klebtechnischen Eigenschaften wurden die Messmethoden H1 und H2 angewandt.

Vergleichsbeispiel II/2:

Die Haftklebemasse PSA1 wurde mit 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Vergleichsbeispiel II/3:

70 Gewichtsanteile der Haftklebemasse PSA1 wurden mit 30 Gewichtsanteilen des Acrylatharzes Dianal MB-2594 und mit 0,5 Gew.-% Speedcure™ ITX, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Beispiel II/4 (Referenz):

Das Beispiel entspricht Beispiel I/2. Zur Überprüfung der klebtechnischen Eigenschaften wurden die Messmethoden H1 und H2 angewandt.

Vergleichsbeispiel II/5:

Die Haftklebemasse PSA1 wurde mit 0,5 Gew.-% Esacure® KIP 150, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Vergleichsbeispiel II/6:

70 Gewichtsanteile der Haftklebemasse PSA1 wurden mit 30 Gewichtsanteilen des Terpen-Phenol-Harzes Dertophene® T110 und 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Vergleichsbeispiel II/7:

70 Gewichtsanteile der Haftklebemasse PSA1 wurden mit 30 Gewichtsanteilen des Harnstoff-Aldehyd- Harzes Laropal® A81 und 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Vergleichsbeispiel II/8:

70 Gewichtsanteile der Haftklebemasse PSA1 wurden mit 30 Gewichtsanteilen des hydrierten Abietinsäureester-Harzes Foral™ 85-E und 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Beispiel II/9:

Das Beispiel entspricht Beispiel I/7. Zur Überprüfung der klebtechnischen Eigenschaften wurden die Messmethoden H1 und H2 angewandt.

Vergleichsbeispiel II/10:

Die Haftklebemasse PSA2 wurde mit 0,5 Gew.-% Esacure® KIP 160, bezogen auf das Polymer, abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Vergleichsbeispiel II/11:

75 Gewichtsanteile der UV-vernetzbaren Haftklebemasse acResin® A260 UV wurden mit 25 Gewichtsanteilen des Acrylatharzes Paraloid™ DM-55 abgemischt. Anschließend wurde analog zu Beispiel I/1 vorgegangen. Das Klebebandmuster wurde mit der UV-Anlage bestrahlt, zur Ermittlung der Vernetzungseffizienz wurden die Messmethode A4 und zur Überprüfung der klebtechnischen Eigenschaften die Messmethoden H1 und H2 durchgeführt.

Zur Demonstration des Harzeinflusses und zur Veranschaulichung der generellen Anwendbarkeit auf Acrylatheißschmelzhaftklebemassen wurden unterschiedliche Harze verwendet sowie harzfreie Muster als Referenz hergestellt. Die Ergebnisse der klebtechnischen Ausprüfung sowie der Vernetzungseffizienz sind in Tabelle 2 dargestellt.

Tabelle 2: Einfluss der Harze

| Tabelle 2 | | | | |
|---|---|---|---|---|
| Beispiel | UV-Bestrahlung (Anzahl der Durchgänge) | Gelwert [%][a)] | KK-Stahl [N/cm][b)] | SSZ RT, 10 N [min][c)] |
| II/1 | 2 | 74 | 7,8 | > 10.000 |
| II/2 | 2 | 75 | 3,0 | 140 |
| II/3 | 2 | 22 | 7,3 | 120 (K) |
| II/4 | 2 | 71 | 7,3 | 5.088 |
| II/5 | 2 | 72 | 3,7 | 178 |
| II/6 | 2 | 20 | 7,1 | < 10 (K) |
| II/7 | 2 | 65 | 6,1 | 1.240 |
| II/8 | 2 | 71 | 5,8 | 890 |
| II/9 | 2 | 61 | 6,2 | > 10.000 |
| II/10 | 2 | 65 | 3,2 | > 10.000 |
| II/11 | 2 | 62 | 5,6 | 1.250 (K) |

[a)] Messmethode A4; [b)] Messmethode H1, KK = Klebkraft; [c)] Messmethode H2, SSZ = Scherstandszeit, RT = Raumtemperatur; sofern keine Angaben zum Ablösemechanismus gegeben sind, handelt es sich um einen Adhäsionsbruch, ansonsten K = Kohäsionsbruch.

Die Ergebnisse in Tabelle 2 belegen, dass erst die Haftklebemasseformulierungen (Beispiele II/1, II/4 und II/9), umfassend einen polyfunktionellen $\alpha$-spaltenden UV-Photoinitiator und ein Acrylat-basiertes Klebharz, zu der gewünschten Kombination aus einer hohen Adhäsion sowie einer hohen Kohäsion führen. Weiterhin ist zu erkennen, dass durch die Verwendung der Acrylatharze (Beispiele II/1 und II/2, II/4 und II/5 sowie II/9 und II/10) die Vernetzung nicht beeinträchtigt wird, jedoch sowohl die Klebkraft als auch die Kohäsion deutlich gesteigert werden. Die Verwendung eines Standardphotoinitiators (Beispiel II/3) führt hingegen zu einer Untervernetzung der Klebemasse. Harze, welche in einem

ähnlichen Wellenlängenbereich wie die Photoinitiatoren absorbieren, führen zu einer drastischen Reduzierung des Vernetzungsgrades, was anhand des Beispiels II/6 verdeutlicht wird. UV-transparente Harze (Beispiele II/7 und II/9) führen zwar zu ausreichenden Vernetzungsgraden, doch sind die klebtechnischen Eigenschaften im Vergleich zu den Acrylatharzen nicht ausreichend. In Beispiel II/11 wird eine kommerziell verfügbare, UV-vernetzbare Acrylathaftklebemasse verwendet, welche mit einem erfindungsgemäßen Acrylatharz compoundiert wird. Hier zeigt sich der oben beschriebene nachteilige Effekt des polymergebundenen Benzophenon-Photoinitiators ebenfalls in Form geringerer Klebkräfte und einer nur schwachen Kohäsion.

Zusammenfassend kann festgestellt werden, dass durch die erfinderischen Haftklebemasseformulierungen ein sehr stabiles, gut vernetzbares Acrylatheißschmelzsystem zur Verfügung steht, welches ein verbessertes Eigenschaftsprofil gegenüber anderen UV-vernetzbaren Acrylathafktklebemassen aufweist.

## Patentansprüche

1. Haftklebemasse, erhältlich durch Vernetzung einer

   Zusammensetzung, umfassend
   mindestens ein Poly(meth)acrylat mit einer gewichtsmittleren Molmasse $M_w$ (ermittelt mit Gelpermeationschromatographie, hierin angegebene Messmethode A2) von mindestens 100.000 g/mol und
   mindestens einen polyfunktionellen $\alpha$-Spalter,
   **dadurch gekennzeichnet, dass**
   die Zusammensetzung mindestens ein klebkraftverstärkendes Harz mit einer gewichtsmittleren Molmasse $M_w$ (ermittelt mit Gelpermeationschromatographie, hierin angegebene Messmethode A2) von maximal 30.000 g/mol enthält, erhältlich durch Polymerisation einer Monomerenzusammensetzung M1, ausschließlich umfassend eine oder mehrere Verbindungen gemäß der Formel (I)

   $$H_2C=C(R^1)(COOR^2) \qquad (I),$$

   worin $R^1$ für ein Wasserstoffatom oder eine Methylgruppe steht und
   $R^2$ für eine unfunktionalisierte $C_1$-$C_{20}$-Alkylgruppe steht.

2. Haftklebemasse gemäß Anspruch 1, **dadurch gekennzeichnet, dass** die Glasübergangstemperatur (dynamische Differenzkalorimetrie nach DIN 53765:1994-03, hierin angegebene Messmethode A3) des Poly(meth)acrylats $T_{G,A}$ bei $\leq$ 15 °C liegt.

3. Haftklebemasse gemäß einem der vorstehenden Ansprüche, **dadurch gekennzeichnet, dass** das klebkraftverstärkende Harz einen Ring- & Ball-Erweichungspunkt (ASTM E28-99) von bei Raumtemperatur flüssig bis 180 °C aufweist.

4. Haftklebemasse gemäß einem der vorstehenden Ansprüche, **dadurch gekennzeichnet, dass** die Glasübergangstemperatur des klebkraftverstärkenden Harzes um mindestens 10 K höher ist als die des Poly(meth)acrylats.

5. Haftklebemasse gemäß einem der vorstehenden Ansprüche, **dadurch gekennzeichnet, dass** der polyfunktionelle $\alpha$-Spalter Oligo[2-hydroxy-2-methyl-1-[4-(1-methylvinyl)phenyl)propanon oder ein $\alpha$-Hydroxyketon der Struktur (IV)

   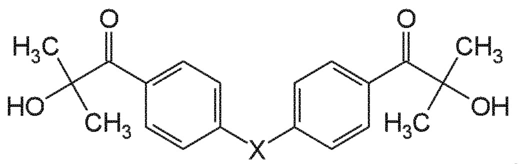 (IV)

   ,

   worin X für ein Sauerstoffatom oder eine $CH_2$-Gruppe steht, ist.

6. Haftklebemasse gemäß einem der vorstehenden Ansprüche, **dadurch gekennzeichnet, dass** die Zusammensetzung 0,1 bis 5 Gew.-%, bezogen auf das zu vernetzende Polymer, polyfunktionelle $\alpha$-Spalter umfasst.

## Claims

1. Pressure sensitive adhesive obtainable by crosslinking a

composition comprising
at least one poly(meth)acrylate having a weight-average molar mass $M_w$, determined by gel permeation chromatography, measurement method A2 specified herein, of at least 100 000 g/mol and
at least one polyfunctional $\alpha$-splitter, **characterized in that**
the composition comprises at least one adhesion-boosting resin having a weight-average molar mass Mw, determined by gel permeation chromatography, measurement method A2 specified herein, of at most 30 000 g/mol, obtainable by polymerizing a monomer composition M1, exclusively comprising one or more compounds according to the formula (I)

$$H_2C=C(R^1)(COOR^2) \qquad (I),$$

in which $R^1$ is a hydrogen atom or a methyl group and $R^2$ is an unfunctionalized $C_1$-$C_{20}$ alkyl group.

2. Pressure sensitive adhesive according to Claim 1, **characterized in that** the glass transition temperature (differential scanning calorimetry according to DIN 53765:1994-03, measurement method A3 specified herein) of the poly(meth)acrylate $T_{g,A}$ is $\leq$ 15°C.

3. Pressure sensitive adhesive according to either of the preceding claims, **characterized in that** the adhesion-boosting resin has a ring & ball softening point (ASTM E28-99) of liquid at room temperature up to 180°C.

4. Pressure sensitive adhesive according to any of the preceding claims, **characterized in that** the glass transition temperature of the adhesion-boosting resin is higher by at least 10 K than that of the poly(meth) acrylate.

5. Pressure sensitive adhesive according to any of the preceding claims, **characterized in that** the polyfunctional $\alpha$-splitter is oligo[2-hydroxy-2-methyl-1-[4-(1-methylvinyl)phenyl)propanone or an $\alpha$-hydroxyketone of the structure (IV)

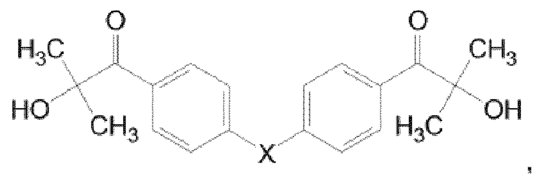

(IV)

in which X is an oxygen atom or a $CH_2$ group.

6. Pressure sensitive adhesive according to any of the preceding claims, **characterized in that** the composition comprises 0.1 to 5 wt%, based on the polymer to be crosslinked, of polyfunctional $\alpha$-splitters.

## Revendications

1. Masse autoadhésive, qui peut être obtenue par la réticulation d'une composition, comprenant au moins un poly(méth)acrylate doté d'une masse molaire moyenne en poids $M_w$, déterminée par chromatographie à perméation de gel, méthode de mesure A2 indiquée ici, d'au moins 100 000 g/mole et

au moins un agent de dissociation $\alpha$ polyfonctionnel,
**caractérisée en ce que** la composition contient au moins une résine renforçant l'adhérence dotée d'une masse molaire moyenne en poids Mw, déterminée par chromatographie à perméation de gel, méthode de mesure A2 indiquée ici, d'au plus 30 000 g/mole, qui peut être obtenue par la polymérisation d'une composition de monomères M1, comprenant exclusivement un ou plusieurs composés selon la formule (I)

$$H_2C=C(R^1)(COOR^2) \qquad (I),$$

dans laquelle $R^1$ représente un atome d'hydrogène ou un groupe méthyle et

$R^2$ représente un groupe $C_{1-20}$-alkyle non fonctionnalisé.

2. Masse autoadhésive selon la revendication 1, **caractérisée en ce que** la température de transition vitreuse (calorimétrie différentielle dynamique selon la norme DIN 53765:1994-03, méthode de mesure A3 indiquée ici) du poly(méth)acrylate $T_{G,A}$ se situe à ≤ 15 °C.

3. Masse autoadhésive selon l'une quelconque des revendications précédentes, **caractérisée en ce que** la résine renforçant l'adhérence présente un point de ramollissement anneau & bille (norme ASTM E28-99) de liquide à température ambiante jusqu'à 180 °C.

4. Masse autoadhésive selon l'une quelconque des revendications précédentes, **caractérisée en ce que** la température de transition vitreuse de la résine renforçant l'adhérence est au moins 10 K supérieure à celle du poly(méth)acrylate.

5. Masse autoadhésive selon l'une quelconque des revendications précédentes, **caractérisée en ce que** l'agent de dissociation α polyfonctionnel est une oligo[2-hydroxy-2-méthyl-1-[4-(1-méthylvinyl)phényl]propanone] ou une α-hydroxycétone de structure (IV)

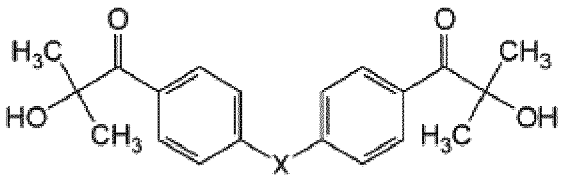

(IV)

dans laquelle X représente un atome d'oxygène ou un groupe $CH_2$.

6. Masse autoadhésive selon l'une quelconque des revendications précédentes, **caractérisée en ce que** la composition comprend 0,1 à 5 % en poids, par rapport au polymère devant être réticulé, d'agents de dissociation α polyfonctionnels.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4234662 A
- US 5391406 A
- US 5416127 A
- DE 2443414 A1
- DE 2743979 A1
- EP 0578151 B1
- EP 0343467 A2
- US 5047443 A
- US 5264533 A
- US 5194455 A
- WO 9635725 A1
- WO 9635725 A2
- WO 0228963 A2
- DE 102004003764 A1
- US 2005182150 A1

### In der Beschreibung aufgeführte Nicht-Patentliteratur

- **F. R. SCHWARZL.** Polymermechanik: Struktur und mechanisches Verhalten von Polymeren. Springer Verlag, 1990, 89-91
- **T.G. FOX.** Bull. Am. Phys. Soc. 1956, vol. 1, 123
- **DONATAS SATAS.** Handbook of Pressure Sensitive Adhesive Technology. van Nostrand, 1989
- *Polymer,* 1967, vol. 8, 381 ff